(19) Europäisches Patentamt
European Patent Office
Office européen des brevets

(11) EP 1 997 781 B1

(12) EUROPÄISCHE PATENTSCHRIFT

(45) Veröffentlichungstag und Bekanntmachung des Hinweises auf die Patenterteilung:
16.07.2014 Patentblatt 2014/29

(51) Int Cl.:
B01J 37/02 (2006.01)     B01J 37/34 (2006.01)
B01J 35/00 (2006.01)     B01J 35/10 (2006.01)
C04B 35/626 (2006.01)    B01J 21/06 (2006.01)
C01G 23/07 (2006.01)

(21) Anmeldenummer: 07108639.1

(22) Anmeldetag: 22.05.2007

(54) **Verfahren zur Herstellung von Titandioxid mit variabler Sinteraktivität**

Method for making titanium dioxide with variable sinter activity

Procédé de production d'oxyde de titane à activité de concrétion variable

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**03.12.2008 Patentblatt 2008/49**

(73) Patentinhaber: **Evonik Degussa GmbH**
**45128 Essen (DE)**

(72) Erfinder:
• **Schulze-Isfort, Christian, Dr.**
**63694 Limeshain (DE)**
• **Schumacher, Kai, Dr.**
**65719 Hofheim (DE)**
• **Schuhardt, Nina**
**63762 Ringheim (DE)**
• **Klotz, Oswin**
**63825 Westerngrund (DE)**

(56) Entgegenhaltungen:
**EP-A- 1 243 555          EP-A- 1 354 854**
**DE-A1-102004 055 165     JP-A- H10 251 021**
**US-A- 5 861 132**

• **R. R. BACSA, J. KIWI: "Effect of rutile phase on the photocatalytic properties of nanocrystalline titania during the degradation of p-coumaric acid" APPLIED CATALYSIS B: ENVIRONMENTAL, Bd. 16, Nr. 1, 6. März 1998 (1998-03-06), Seiten 19-29, XP002463932 Elsevier B.V**
• **AKURATI ET AL: "Synthesis of non-aggregated titania nanoparticles in atmospheric pressure diffusion flames" POWDER TECHNOLOGY, ELSEVIER SEQUOIA, LAUSANNE, CH, Bd. 165, Nr. 2, 13. Juli 2006 (2006-07-13), Seiten 73-82, XP005518233 ISSN: 0032-5910**

EP 1 997 781 B1

**Beschreibung**

Gegenstand der Erfindung ist ein Verfahren zur Herstellung von Titandioxidpulver mit variabler Sinterstabilität

Es ist bekannt, Titandioxid mittels pyrogener Prozesse herzustellen. Unter pyrogenen Prozessen sind Flammenoxidationen oder Flammenhydrolysen zu verstehen. Bei der Flammenoxidation wird ein Titandioxidprecursor, beispielsweise Titantetrachlorid, mittels Sauerstoff gemäß Gl. 1a oxidiert. Bei der Flammenhydrolyse erfolgt die Bildung von Titandioxid durch Hydrolyse des Titandioxidprecursors, wobei das zur Hydrolyse notwendige Wasser aus der Verbrennung eines Brenngases, beispielsweise Wasserstoff, und Sauerstoff stammt (Gl. 1b).

$$TiCl_4 + O_2 -> TiO_2 + 2\ Cl_2 \text{ (Gl. 1a)}$$

$$TiCl_4 + 2\ H_2O -> TiO_2 + 4\ HCl \text{ (Gl. 1b)}$$

Das Titandioxid liegt dabei in der Regel in den kristallinen Modifikationen Anatas und Rutil vor. Bei dem im nachfolgend ausgeführten Stand der Technik richtet sich dabei das Hauptaugenmerk auf eine Maximierung des Anatas-Anteiles.

In WO 96/06803 wird ein Verfahren zur Herstellung von Titandioxid durch eine Kombination von Flammenoxidation und Flammenhydrolyse beschrieben. Dabei werden dampfförmiges Titantetrachlorid und Sauerstoff in einer Reaktionszone vermischt und das Gemisch in einer Flamme erhitzt, welches durch Verbrennung eines Kohlenwasserstoffes als Brenngas erzeugt wird. Es werden Titandioxidpulver mit BET-Oberflächen von ca. 70 bis 110 $m^2$/g offenbart, die einen Rutil-Anteil von weniger als 10% aufweisen.

In Powder Technology 86 (1996) 87-93 wird ein Flammenoxidationsverfahren, welches in einem Diffusionsreaktor durchgeführt wird, offenbart. In einem Bereich von BET-Oberflächen von ca. 80 - 120 $m^2$/g ist kein Rutil nachzuweisen.

In DE-A-102004055165 wird ein flammenhydrolytisch hergestelltes Titandioxidpulver mit einer BET-Oberfläche von 20 bis 200 $m^2$/g offenbart. Obwohl bei einer gegebenen Oberfläche das Anatas/Rutil-Verhältnis in einem Bereich von 2:98 bis 98:2 variierbar sein soll, zeigen die Ausführungsbeispiele, dass der Anatas-Anteil deutlich dominiert. Insbesondere in einem Bereich von BET-Oberflächen von ca. 70-100 $m^2$/g liegt der Anatas-Anteil bei mindestens 90%.

In JP-A-10251021 werden explizit drei durch Flammenoxidation erhältliche Titandioxidpulver mit BET-Oberflächen von 3,2, 28 und 101 $m^2$/g und einem Rutil-Anteil von entsprechend 97, 32 und 15% offenbart.

Basca et al., Applied Catalysis B: Environmental 16 (1998) 19-29, offenbaren ein Titandioxidpulver, welches eine BET-Oberfläche von 72 $m^2$/g und einen Rutilanteil von 30% aufweist.

Der Stand der Technik zeigt das rege Interesse an pyrogen hergestelltem Titandioxid. Aufgrund der Komplexität von pyrogenen Prozessen lassen sich nur wenige Stoffparameter gezielt einstellen.

Titandioxid kann beispielsweise als Katalysator oder Katalysatorträger eingesetzt werden. Hier kann es wünschenswert sein Pulver zur Verfügung zu haben, deren Sinterstabilität bei gegebener BET-Oberfläche variabel ist.

Aufgabe der vorliegenden Erfindung war es daher ein Verfahren zur Herstellung eines Titandioxidpulvers bereitzustellen, welches eine variable Sinterstabilität aufweist.

Gegenstand der Erfindung ist ein Verfahren zur Herstellung eines Titandioxidpulvers, bei dem man

-  Dampf von Titantetrachlorid und getrennt hiervon Wasserstoff, Luft oder mit Sauerstoff angereicherte Luft in eine Mischkammer überführt, anschließend
-  das Gemisch aus dem Dampf von Titantetrachlorid, Wasserstoff und Primärluft in einem Brenner zündet und die Flamme in eine Reaktionskammer hinein verbrennt,
-  anschließend den Feststoff von gasförmigen Stoffen abtrennt,
-  wobei
    die Einsatzstoffmengen zum Erzielen der BET-Oberfläche von 70 - 100 $m^2$/g und des Rutil-Anteiles von >10 - 40% so gewählt sind, dass die Gleichung

$A = 10^5 \{[(TiCl_4 \times H_2)/(\text{Luftmenge} \times \text{Gesamtgas})]/BET]\}$ mit
$A = 0,1$ bis $0,4$ erfüllt ist, und wobei die Einheit von $TiCl_4$, $H_2$, Luftmenge und Gesamtgas kmol/h, die der BET-Oberfläche $m^2$/g und die von A $10^5$ $g/m^2$ ist.

Die Gesamtgasmenge setzt sich zusammen aus Titantetrachlorid, Wasserstoff, Primärluft und gegebenenfalls Sekundärluft.

Das Titantetrachlorid wird vorzugsweise bei Temperaturen von weniger als 200°C verdampft.

Das erfindungsgemäße Verfahren kann auch so ausgeführt werden, dass man zusätzlich zur Primärluft noch Sekundärluft in die Reaktionskammer einbringt. Bei einer solchen Ausführungsform hat es sich als vorteilhaft erwiesen, wenn das Verhältnis Primärluft/Sekundärluft von 10 bis 0,1 beträgt. Besonders bevorzugt ist ein Bereich von 4,5 bis 0,3.

Um die Menge an Sekundärluft genau dosieren zu können, ist es erforderlich die Flamme in eine von der Umgebungsluft abgeschlossene Reaktionskammer hinein verbrennen zu lassen. Dadurch gelingt eine genau Prozessführung.

Es ist prinzipiell möglich, das Verfahren so auszuführen, dass die Primärluft und/oder Sekundärluft mit Sauerstoff angereichert ist oder dass die Primärluft und/oder Sekundärluft vorerhitzt sind. Unter "vorerhitzt" ist dabei das Vorerhitzen der Luft auf Temperaturen von 50°C bis 500°C zu verstehen.

Ferner wird die Reaktion vorzugsweise so geführt, dass der Lambda-Wert im Bereich von 1 bis 9 und der Gamma-Wert im Bereich von 1 bis 9 liegt.

Flammenhydrolytisch hergestellte Oxide werden üblicherweise so erhalten, dass die gasförmigen Ausgangsstoffe in einem derartigen stöchiometrischen Verhältnis zueinander stehen, dass der zugeführte Wasserstoff mindestens ausreicht um das vorhandene Chlorid aus $TiCl_4$ zu HCl abzureagieren. Die hierfür benötigte Menge an Wasserstoff wird als stöchiometrische Wasserstoffmenge bezeichnet.

Das Verhältnis von dem zugeführten zu dem soeben definierten stöchiometrisch erforderlichen Wasserstoff wird als Gamma bezeichnet. Es bedeutet demnach:

Gamma = $H_2$ eingespeist (Mol)/$H_2$ stöchiometrisch (Mol).

Bei flammenhydrolytisch hergestellten Oxiden wird weiterhin üblicherweise eine Sauerstoffmenge (beispielsweise aus der Luft) eingesetzt, die mindestens ausreicht um $TiCl_4$ in Titandioxid zu überführen und eventuell noch vorhandenen überschüssigen Wasserstoff zu Wasser umzusetzen. Diese Sauerstoffmenge wird als stöchiometrische Sauerstoffmenge bezeichnet.

Analog wird das Verhältnis von zugeführtem Sauerstoff zum stöchiometrisch benötigten Sauerstoff als Lambda bezeichnet. Es bedeutet demnach:

Lambda = $O_2$ eingespeist (Mol)/$O_2$ stöchiometrisch (Mol).

Nach der Abtrennung von gasförmigen Stoffen kann das Titandioxidpulver vorzugsweise mit Wasserdampf behandelt werden. Diese Behandlung dient in erster Linie chloridhaltige Gruppen von der Oberfläche zu entfernen. Gleichzeitig reduziert diese Behandlung die Anzahl von Agglomeraten. Das Verfahren kann kontinuierlich so ausgeführt werden, dass das Pulver mit Wasserdampf, gegebenenfalls zusammen mit Luft, im Gleich- oder Gegenstrom behandelt wird. Die Temperatur bei der die Behandlung mit Wasserdampf erfolgt, beträgt zwischen 250 und 750°C, wobei Werte von 450 bis 550°C bevorzugt sind.

Der Rutil-Anteil ist der Prozentsatz der Summe der kristallinen Modifikationen Rutil und Anatas, die zusammen 100% ergeben. Der Rutil-Anteil kann bevorzugt 16 bis 30% sein.

Die BET-Oberfläche des Titandioxidpulvers kann bevorzugt bei 75 bis 95 $m^2$/g und besonders bevorzugt 80 bis 90 $m^2$/g sein.

In Röntgendiffaktogrammen des Titandioxidpulvers sind außer Rutil und Anatas in der Regel keine weiteren kristallinen Modifikationen detektierbar.

Unter Primärpartikel werden im Sinne der Erfindung Partikel verstanden, die zunächst in der Reaktion gebildet, und im weiteren Reaktionsverlauf zu Aggregaten zusammenwachsen können.

Unter Aggregat im Sinne der Erfindung sind miteinander verwachsene Primärpartikel ähnlicher Struktur und Größe zu verstehen, deren Oberfläche kleiner ist, als die Summe der einzelnen, isolierten Primärpartikel. Mehrere Aggregate oder auch einzelne Primärpartikel können sich weiter zu Agglomeraten zusammenfinden. Aggregate oder Primärpartikel liegen dabei punktförmig aneinander. Agglomerate können jeweils in Abhängigkeit von ihrem Verwachsungsgrad durch Energieeintrag wieder zerlegt werden.

Der Anteil von Aggregaten und/oder Agglomeraten mit einem Durchmesser von mehr als 45 µm des Titandioxidpulvers liegt in einem Bereich von 0,0001 bis 0,05 Gew.-%. Bevorzugt kann ein Bereich von 0,001 bis 0,01 Gew.-% und besonders bevorzugt ein Bereich von 0,002 bis 0,005 Gew.-% sein.

Das Titandioxidpulver kann Reste von Chlorid enthalten. Der Gehalt an Chlorid ist bevorzugt kleiner als 0,1 Gew.-%. Besonders bevorzugt kann ein Titandioxidpulver mit einem Chloridgehalt im Bereich von 0,01 bis 0,05 Gew.-% sein.

Die Stampfdichte des Titandioxidpulvers ist nicht limitiert. Es hat sich jedoch als vorteilhaft erwiesen, wenn die Stampfdichte Werte von 20 bis 200 g/l. Besonders bevorzugt kann eine Stampfdichte von 30 bis 120 g/l sein.

Beispiele

Analytik

Die BET-Oberfläche wird nach DIN 66131 bestimmt.

Die Stampfdichte wird in Anlehnung an DIN ISO 787/XI K 5101/18 (nicht gesiebt) bestimmt.

Die Schüttdichte wurde bestimmt nach DIN-ISO 787/XI.

Der pH-Wert wird in Anlehnung an DIN ISO 787/IX, ASTM D 1280, JIS K 5101/24 bestimmt.

Der Anteil der Partikel größer als 45 μm wird bestimmt nach DIN ISO 787/XVIII, JIS K 5101/20

Bestimmung des Chlorid-Gehaltes: Ca. 0,3 g der Partikel werden genau eingewogen, mit 20 ml 20 prozentiger Natronlauge p.a. versetzt, gelöst und unter Rühren in 15 ml gekühlte $HNO_3$ überführt. Der Chlorid-Anteil in der Lösung wird mit $AgNO_3$-Lösung (0,1 mol/l oder 0,01 mol/l) titriert.

Beispiel 1 (gemäß Erfindung)

0,0032 kmol/h $TiCl_4$-Dampf werden in eine Mischkammer überführt. Getrennt hiervon werden 0,022 kmol/h Wasserstoff und 0,240 kmol/h Primärluft in die Mischkammer eingebracht. Das Reaktionsgemisch wird einem Brenner zugeführt und gezündet. Dabei brennt die Flamme in ein wassergekühltes Flammrohr. Zusätzlich werden in den Reaktionsraum 0,535 kmol/h Sekundärluft eingebracht. Das entstandene Pulver wird in einem nachgeschalteten Filter abgeschieden und anschließend im Gegenstrom mit Luft und Wasserdampf bei 520°C behandelt.

Aus den Einsatzstoffmengen berechnet sich der Faktor A zu 0,116 g/m$^2$.

Das Titandioxidpulver weist eine BET-Oberfläche von 98 m$^2$/g und einen Rutil-Anteil von 11% auf.

Die erfindungsgemäßen Beispiele 2 bis 5 werden analog durchgeführt. Einsatzstoffmengen und BET-Oberfläche und Rutil-Gehalt der erhaltenen Pulver sind in der Tabelle wiedergegeben.

Die Vergleichsbeispiele C1 bis C10 werden ebenfalls analog Beispiel 1 durchgeführt, jedoch sind die Einsatzstoffmengen so gewählt, dass der Faktor A außerhalb des erfindungsgemäßen Bereiches liegen. Die resultierenden Titandioxidpulver weisen BET-Oberflächen und Rutil-Gehalte auf, die außerhalb des erfindungsgemäßen Bereiches liegen.

C11 ist kommerziell erhältliches Titandioxidpulver Aeroxide® $TiO_2$ P25, Degussa.

Tabelle 2 zeigt, dass die Titandioxidpulver bei vergleichbarer BET-Oberfläche, Beispiele 2 und 3, jedoch unterschiedlichem Rutil-Gehalt deutlich unterschiedliche Sinterstabilitäten zeigen. Allgemein gilt für die Titandioxidpulver, dass ein erhöhter Rutil-Gehalt zu einer höheren Sinterstabilität führt. Dagegen zeigen die Titanoxidpulver nach dem Stand der Technik, Vergleichsbeispiele C4 und C11, bei vergleichbarer BET-Oberfläche aber unterschiedlichem Rutil-Gehalt kaum einen Unterschied in der Sinterstabilität.

**Tabelle 1: Einsatzstoffmengen; BET-Oberfläche und Rutil-Gehalt der erhaltenen Pulver**

| Beispiel | TiCl$_4$ | H$_2$ | Luft Primär | Sekundär | Gesamt | O$_2$ Gesamt | Gesamt-gas | gamma | lambda | A | Rutil | BET |
|---|---|---|---|---|---|---|---|---|---|---|---|---|
| | kmol/h | kmol/h | kmol/h | kmol/h | kmol/h | kmol/h | kmol/h | | | g/m$^2$ | % | m$^2$/g |
| 1 | 0,003 | 0,022 | 0,240 | 0,535 | 0,775 | 0,163 | 0,800 | 3,460 | 4,520 | 0,116 | 11 | 98 |
| 2 | 0,007 | 0,020 | 0,210 | 0,535 | 0,745 | 0,156 | 0,772 | 1,490 | 4,490 | 0,306 | 14 | 75 |
| 3 | 0,007 | 0,027 | 0,223 | 0,535 | 0,758 | 0,159 | 0,792 | 2,030 | 3,500 | 0,386 | 20 | 77 |
| 4 | 0,137 | 1,370 | 16,670 | 5,800 | 22,470 | 4,719 | 23,977 | 5,000 | 5,000 | 0,367 | 35 | 95 |
| 5 | 0,137 | 1,370 | 12,441 | 15,530 | 27,971 | 5,874 | 29,478 | 5,000 | 3,800 | 0,312 | 28 | 73 |
| C1 | 0,137 | 1,885 | 15,951 | 5,800 | 21,751 | 4,568 | 23,773 | 6,880 | 3,550 | 0,549 | 7 | 91 |
| C2 | 0,005 | 0,067 | 0,120 | 0,419 | 0,539 | 0,113 | 0,611 | 6,350 | 0,760 | 3,992 | 8 | 27 |
| C3 | 0,008 | 0,067 | 0,161 | 0,419 | 0,580 | 0,122 | 0,655 | 4,240 | 1,010 | 4,495 | 26 | 31 |
| C4 | 1,920 | 6,100 | 47,120 | 15,530 | 62,650 | 13,157 | 70,670 | 1,590 | 3,270 | 5,187 | 16 | 49 |
| C5 | 1,920 | 5,430 | 47,460 | 15,530 | 62,990 | 13,228 | 70,340 | 1,410 | 3,680 | 4,614 | 12 | 51 |
| C6 | 1,920 | 6,100 | 48,150 | 22,510 | 70,660 | 14,839 | 78,680 | 1,590 | 3,310 | 4,213 | 15 | 50 |
| C7 | 0,042 | 0,190 | 0,683 | 0,892 | 1,575 | 0,331 | 1,807 | 2,250 | 1,510 | 8,247 | 54 | 34 |
| C8 | 0,042 | 0,127 | 0,446 | 0,803 | 1,249 | 0,262 | 1,418 | 1,510 | 1,470 | 8,858 | 57 | 34 |
| C9 | 0,042 | 0,190 | 0,455 | 0,803 | 1,258 | 0,264 | 1,490 | 2,250 | 1,010 | 11,203 | 66 | 38 |
| C10 | 0,042 | 0,127 | 0,306 | 0,803 | 1,109 | 0,233 | 1,278 | 1,510 | 1,010 | 10,753 | 65 | 35 |
| C11* | 1,920 | 6,540 | 48,410 | 15,230 | 63,640 | 13,364 | 72,100 | 1,700 | 3,100 | 5,366 | 23 | 49 |
| C12* | 0,137 | 2,070 | 20,350 | 4,900 | 25,250 | 5,303 | 27,457 | 7,560 | 4,100 | 0,455 | 5 | 90 |

*: C11: Aeroxide® TiO$_2$ P25, C12: Peroxide® TiO$_2$ VP P90;

EP 1 997 781 B1

**Tabelle 2: Sinterstabilität**

| | Rutil | BET | | |
| --- | --- | --- | --- | --- |
| | | wie erhalten | 600°C* | Verlust |
| **Pulver aus Beispiel** | % | $m^2/g$ | $m^2/g$ | % |
| **2** | 14 | 75 | 52 | 31 |
| **3** | 20 | 77 | 60 | 22 |
| **C4** | 16 | 50 | 42 | 16 |
| **C12** | 23 | 49 | 40 | 18 |
| **\* 600°C\* / 3 h** | | | | |

**Patentansprüche**

1. Verfahren zur Herstellung eines kristallinen Titandioxidpulvers in Form von aggregierten Primärpartikeln mit einer BET-Oberfläche von 70 - 100 $m^2/g$ und einem Rutil-Anteil von >10 - 40% , **dadurch gekennzeichnet, dass** man

   - Dampf von Titantetrachlorid und getrennt hiervon Wasserstoff, Luft oder mit Sauerstoff angereicherte Luft in eine Mischkammer überführt, anschließend
   - das Gemisch aus dem Dampf von Titantetrachlorid, Wasserstoff und Primärluft in einem Brenner zündet und die Flamme in eine Reaktionskammer hinein verbrennt,
   - anschließend den Feststoff von gasförmigen Stoffen abtrennt, wobei
   die Einsatzstoffmengen zum Erzielen der BET-Oberfläche von 70 - 100 $m^2/g$ und des Rutil-Anteiles von >10 - 40% so gewählt sind, dass die Gleichung

$$A = 10^5\{[(TiCl_4 \times H_2)/(Luftmenge \times Gesamtgas)]/BET]\}$$

   mit
   A = 0,1 bis 0,4 erfüllt ist, und wobei die Einheit von $TiCl_4$, $H_2$, Luftmenge und Gesamtgas kmol/h, die der BET-Oberfläche $m^2/g$ und die von A $10^5$ $g/m^2$ ist.

**Claims**

1. Process for preparing a crystalline titanium dioxide powder in the form of aggregated primary particles having a BET surface area of 70-100 $m^2/g$ and a proportion of rutile of > 10-40%, **characterized in that**

   - vapour of titanium tetrachloride and, separately therefrom, hydrogen, air or oxygenenriched air are introduced into a mixing chamber,
   - the mixture of the vapour of titanium tetrachloride, hydrogen and primary air is subsequently ignited in a burner and the flame burns into a reaction chamber,
   - the solid is subsequently separated off from gaseous materials, where
   the amounts of the ingredients for producing the BET surface area of 70-100 $m^2/g$ and the proportion of rutile of > 10-40% are selected so that the equation

$$A = 10^5\{[(TiCl_4 \times H_2)/(amount\ of\ air \times total\ gas)]/BET]\}$$

   where
   A = 0.1 to 0.4 and the unit of $TiCl_4$, $H_2$, amount of air and total gas is kmol/h, that of the BET surface area is $m^2/g$ and that of A is $10^5$ $g/m^2$, is satisfied.

**Revendications**

1. Procédé pour la préparation d'une poudre de dioxyde de titane cristallin sous forme de particules primaires agglomérées, présentant une surface BET de 70-100 m$^2$/g et une proportion de rutile >10-40%, **caractérisé en ce qu'**on

   - transfère de la vapeur de tétrachlorure de titane et, séparément de celle-ci, de l'hydrogène, de l'air ou de l'air enrichi en oxygène dans une chambre de mélange, puis
   - enflamme le mélange de la vapeur de tétrachlorure de titane, d'hydrogène et d'air primaire dans un brûleur et on brûle la flamme qui entre dans une chambre de réaction,
   - sépare ensuite le solide des substances gazeuses, les quantités de départ pour atteindre la surface BET de 70-100 m$^2$/g et la proportion de rutile >10-40% étant choisies de manière à satisfaire à l'équation

   ```
   A   =   10⁵{[(TiCl₄   x   H₂)/(quantité   d'air   x   gaz
         total)]/BET]}
   ```

   où
   A = 0,1 à 0,4, et l'unité de TiCl$_4$, de H$_2$, de la quantité d'air et du gaz total étant kmole/h, celle de la surface BET étant m$^2$/g et celle de A étant 10$^5$ g/m$^2$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9606803 A
- DE 102004055165 A

- JP 10251021 A

**In der Beschreibung aufgeführte Nicht-Patentliteratur**

- *Powder Technology,* 1996, vol. 86, 87-93

- **BASCA et al.** *Applied Catalysis B: Environmental,* 1998, vol. 16, 19-29